# EUROPÄISCHE PATENTANMELDUNG

(11) **EP 1 770 130 A1**
(43) Veröffentlichungstag der Anmeldung: **04.04.2007**
(21) Anmeldenummer: 06017018.0
(22) Anmeldetag: 16.08.2006
(51) Int. Cl.: C09D 5/32, C09D 4/00

(54) **Verfahren zur Herstellung einer Kunststoff-Formhaut**

(30) Priorität: 23.08.2005 DE 102005041025
(71) Anmelder: KARL WÖRWAG LACK- UND FARBENFABRIK GMBH & CO. KG, 70435 Stuttgart (DE)
(72) Erfinder: Friebe, Jörg, 71282 Hemmingen (DE); Bicer, Taner, 70376 Stuttgart (DE); Ortmeier, Jürgen, 73230 Kirchheim (DE)
(74) Vertreter: Patentanwälte Ruff, Wilhelm, Beier, Dauster & Partner

(57) **Zusammenfassung**

Die Erfindung betrifft ein Verfahren zur Herstellung einer Kunststoff-Formhaut für Formteile, insbesondere für Innenverkleidungsteile aus Kunststoff für Kraftfahrzeuginnenräume, wobei die Formhaut aus einer Lackzusammensetzung hergestellt wird, die durch Bestrahlung mindestens teilweise gehärtet wird. Zudem betrifft die Erfindung durch Strahlung mindestens teilweise gehärtete Kunststoff-Formhäute, ein Verfahren zur Herstellung von Formteilen mit mindestens teilweise gehärteter Kunststoff-Formhaut sowie Formteile mit mindestens teilweise gehärteter Formhaut. Daneben wird eine strahlungshärtbare Lackzusammensetzung und die Verwendung einer strahlungshärtbaren Lackzusammensetzung angegeben.

## Beschreibung

Die Erfindung betrifft ein Verfahren zur Herstellung einer Kunststoff-Formhaut für Formteile, insbesondere für Innenverkleidungsteile aus Kunststoff für Kraftfahrzeuginnenräume.

An Innnenverkleidungsteile aus Kunststoff für Kraftfahrzeuge werden hohe Anforderungen in Bezug auf Aussehen und Haptik gestellt. Zudem stehen bei diesen häufig großflächigen Formteilen insbesondere geringes Gewicht und geringe Herstellungskosten im Vordergrund. Innenverkleidungsteile wie Instrumententafeln, Türverkleidungen, Seitenverkleidungen, Armstützen, Kopfstützen, Bodenkonsolen, Kniepolster und Handschuhkastenklappen können durch Aufbringen eines dekorativen Überzugs auf ein in einer Kraftfahrzeugkarosserie montierbares Trägerteil hergestellt werden. Dem dekorativen Überzug kann dabei eine vorbestimmte Textur und Farbe verliehen werden, beispielsweise um das Aussehen und Gefühl von echtem Leder zu simulieren. Zwischen dem dekorativen Überzug und dem meist steifen Trägerteil wird bei Bedarf eine weiche Zwischenschicht, vorzugsweise aus Polyurethanschaum, als Polsterung angeordnet.

Entsprechend weisen Innenverkleidungsteile häufig einen Schichtaufbau auf. Auf dem Trägerteil, das für die erforderliche mechanische Stabilität sorgt, befindet sich der Überzug, der die Sicht- und Berührungsfläche des Bauteils bildet. Dazwischen kann sich im Bedarfsfall die erwähnte Zwischenschicht aus Schaumstoff befinden, die für eine ausreichende Weichheit des Formteils sorgt.

Als dekorative Überzüge wurden insbesondere bei Türverkleidungen, Mittelkonsolen, Ablagen und anderen großflächigen Verkleidungsteilen im Kraftfahrzeuginnenraum bislang häufig Folien eingesetzt, die somit die Sicht- und Berührungsfläche des Formteils bildeten. So können PVC/ABS-Folien beispielsweise nach einem Thermoform-Verfahren verformt und anschließend in einem zweiten Verfahrensschritt hinterschäumt werden. PVC-Folien können nach dem PVC-Powder-Slush-Verfahren hergestellt und zur Hinterschäumung eingesetzt werden. Folien haben jedoch als vorfabrizierte, dünne Flächenelemente den grundsätzlichen Nachteil, daß schon eine leichte Foliendehnung vorhandene Oberflächenkonturen zerstören kann. Gegebenenfalls kann die Foliendickenreduzierung bei der Dehnung auch zum Reißen der Folie führen.

Diese Probleme treten bei der Verwendung von sogenannten Formhäuten als dekorative Überzüge nicht auf. Im Gegensatz zu Folien können Formhäute in idealer Weise eine vorgegebene Oberflächenkontur nachbilden, da sie in einer die gewünschte Oberflächenkontur als Negativ aufweisenden Form hergestellt werden. So wird beispielsweise beim sogenannten "in-mould-coating" (kurz: IMC, wird auch als Form-LackierVerfahren bezeichnet) eine Lackzusammensetzung (z.B. ein Polyurethan-System aus mehreren Komponenten) auf die Seite einer Form aufgetragen, die die Sichtseite des Formteils abbildet. Die applizierte Lackzusammensetzung härtet unter Bildung der Formhaut aus. Eine vollständige Aushärtung ist zur Weiterverarbeitung nicht erforderlich. In einem weiteren Schritt wird die Form geschlossen und beispielsweise durch Einspritzen eines weiteren Polyurethan-Systems ein Trägerteil an die Formhaut angeformt. Nach Ablauf der Reaktionszeit wird das Trägerteil, überzogen mit der Formhaut, dem Werkzeug entnommen. Nach dem IMC-Verfahren hergestellte Formteile zeichnen sich unter anderem durch eine hervorragende Haftung zwischen Trägerteiloberfläche und Formhaut aus.

Die Herstellung eines Innenverkleidungsteils mit Schichtaufbau ist beispielsweise in der DE 201 00 506 beschrieben. Darin ist ein 3-Schritt-Verfahren beschrieben, in dem eine Formhaut und ein Trägerteil jeweils separat ausgeformt werden und in einem dritten Schritt flüssiges Polyurethan in einen zwischen Formhaut und Trägerteil gebildeten Zwischenraum eingespritzt wird, wobei ein an der Formhaut ausgebildeter Dichtprofilrand für eine Abdichtung des Zwischenraums sorgt. Das Polyurethan schäumt im Zwischenraum auf und verbindet die Formhaut mit dem Trägerteil dauerhaft.

Natürlich kann eine Formhaut mit einem Trägerteil auch ohne dazwischenliegende Polsterung verbunden werden. Das direkte Verbinden des Überzugs mit dem Trägerteil erfolgt beispielsweise durch Hinterspritzen, Hinterschäumen mit Halbhartschaum, Hinterpressen oder Ähnliches.

Formhäute aus Mehrkomponentensystemen wie Polyurethan werden beispielsweise über Sprüh- oder Gießtechniken hergestellt, bei denen eine Lackzusammensetzung durch Sprühen oder Gießen in eine Form appliziert wird. Vor der Weiterverarbeitung muß die applizierte Lackzusammensetzung, wie oben bereits erwähnt, zumindest teilweise zur Formhaut ausgehärtet sein. Zu applizierende Lackzusammensetzungen enthalten gemäß dem Stand der Technik deshalb neben dem Stammlack eine Härter-Komponente. Die Lackzusammensetzung wird aus den Einzelkomponenten Stammlack und Härter entweder vorgemischt oder die Mischung erfolgt beim Applizieren. Zur Initiierung bzw. zur Beschleunigung des Härtungsprozesses ist die Form üblicherweise auf Temperaturen zwischen 50 °C und 80 °C erwärmt. Trotz dieser Maßnahme handelt es sich beim Härtungsprozeß um einen relativ zeitintensiven Schritt, der dem zeitlichen Anforderungsprofil moderner Produktionsabläufe kaum noch gerecht wird. In Folge dessen ergibt sich hier insbesondere aus zeitlicher Sicht ein besonders hohes Verbesserungspotential.

Die Erfindung stellt sich dementsprechend die Aufgabe, ein neues Verfahren zur Herstellung einer Formhaut für Formteile mit einem insbesondere zeitlich optimierten Härtungsprozeß bereitzustellen.

Zur Lösung dieser Aufgabe schlägt die Erfindung ein Verfahren zur Herstellung einer Kunststoff-Formhaut für Formteile mit den Merkmalen des Anspruchs 1 vor. Bevorzugte Ausführungsformen des erfindungsgemäßen Verfahrens gemäß Anspruch 1 sind in den abhängigen Ansprüchen 2 bis 9 beschrieben. Auch Kunststoff-Formhaut gemäß den Ansprüchen 10 bis 12 und Formteile gemäß den Ansprüchen 15 bis 17 sind Gegenstand dieser Erfindung. Ebenfalls Erfindungsgegenstand sind ein Verfahren zur Herstellung von Formteilen mit den Merkmalen des Anspruch 13, von dem eine bevorzugte Ausführungsform in Anspruch 14 beschrieben ist, die härtbare Lackzusammensetzung gemäß Anspruch 20, deren bevorzugte Ausführungsformen in den Ansprüchen 21 und 22 beschrieben werden sowie die Verwendung der Lackzusammensetzung gemäß dem unabhängigen Anspruch 18 und dem davon abhängigen Anspruch 19. Der Wortlaut sämtlicher Ansprüche wird hiermit durch Bezugnahme zum Inhalt dieser Beschreibung gemacht.

Das erfindungsgemäße Verfahren eignet sich insbesondere zur Herstellung von Innenverkleidungsteilen aus Kunststoff für Kraftfahrzeuginnenräume. Nach der vorliegenden Erfindung wird die Formhaut aus einer Lackzusammensetzung hergestellt, die durch Bestrahlung mindestens teilweise gehärtet wird. Bei der Bestrahlung härtet die Lackzusammensetzung unter Bildung einer Formhaut mindestens teilweise aus. Die Bestrahlung muss dabei nicht in einem Schritt erfolgen, sie kann durchaus ein- oder mehrfach wiederholt werden. Besonders bevorzugt wird die Lackzusammensetzung zweimal bestrahlt.

Die Bestrahlung der Lackzusammensetzung wird vorzugsweise mit elektromagnetischer Strahlung, insbesondere mit UV-Strahlung, vorgenommen. Allerdings ist auch der Einsatz von Teilchenstrahlung wie E-lektronenstrahlung möglich. Zur Bestrahlung mit UV-Strahlung werden vorzugsweise mit Eisen oder Gallium dotierte Quecksilbermitteldrucklampen verwendet. Diese werden vorzugsweise mit einer Belichtungsstärke von ca. 15 W/cm² und in einem Abstand von ca. 10 cm bis 12 cm zur zu bestrahlenden Lackzusammensetzung betrieben.

Besonders bevorzugt erfolgt die Bestrahlung der Lackzusammensetzung in einer Form. Dazu wird die Lackzusammensetzung vor der Bestrahlung beispielsweise durch Sprüh- oder Gießverfahren in die Form appliziert. Vorzugsweise erfolgt die Applikation mittels eines pneumatischen Lackierverfahrens. Dabei wird die Lackzusammensetzung idealerweise möglichst gleichmäßig in die Form eingebracht, so daß überall eine deckende Schicht erzielt wird.

Es ist bevorzugt, daß die Form schon während des Applizierens der Lackzusammensetzung erwärmt ist, insbesondere auf eine Temperatur im Bereich zwischen 60 °C und 80 °C. Besonders bevorzugt ist die Form über den gesamten Verlauf des erfindungsgemäßen Verfahrens beheizt, insbesondere auf 60 °C bis 80 °C.
Gegebenenfalls wird die Form vor Einbringen der Lackzusammensetzung mit einem Trennmittel versehen, das die spätere Entnahme der Formhaut aus der Form erleichtert.

Wenn die Formhaut aus einer Lackzusammensetzung hergestellt wird, die mindestens ein organisches Lösungsmittel und/oder Wasser enthält, so ist es bevorzugt, daß diese flüchtigen Bestandteile vor der Bestrahlung im wesentlichen vollständig entfernt werden. Dies geschieht insbesondere durch Ablüften.

Die Bestrahlung wird, wie oben bereits erwähnt, gegebenenfalls mehrfach durchgeführt. Darüber hinaus kann es bevorzugt sein, daß die Lackzusammensetzung nach der mindestens teilweisen Härtung in mindestens einem weiteren Bestrahlungsschritt endgehärtet wird. Dieser weitere Bestrahlungsschritt zur Endhärtung der Lackzusammensetzung wird vorzugsweise erst nach Entnahme der Formhaut aus einer Form vorgenommen. Nach der Entnahme kann die Formhaut nämlich auch von der Sichtseite bestrahlt werden.

Eine erfindungsgemäß besonders bevorzugt eingesetzte Lackzusammensetzung enthält 20 Gew.-% bis 90 Gew.-%, vorzugsweise 30 Gew.-% bis 80 Gew.-%, insbesondere 40 Gew.-% bis 70 Gew.-%, mindestens eines radikalisch polymerisierbaren Bindemittels. Darüber hinaus enthält sie 0,1 Gew.-% bis 8 Gew.-%, vorzugsweise 1 Gew.-% bis 7 Gew.-%, insbesondere 2 Gew.-% bis 6 Gew.-%, mindestens eines Photoiniitators. Zusätzlich können bis zu 20 Gew.-% eines Lackhilfsmittels oder einer Lackhilfsmittelkombination, bis zu 50 Gew.-%, vorzugsweise bis zu 20 Gew.-% mindestens eines organischen Lösungsmittels, bis zu 10 Gew.-%, vorzugsweise bis zu 5 Gew.-% Wasser und bis zu 30 Gew.-% Pigmente und/oder Füllstoffe in der Lackzusammensetzung enthalten sein.

Die Bestandteile der Lackzusammensetzung wie das mindestens eine radikalisch polymerisierbare Bindemittel, der mindestens eine Photoinitiator und die genannten fakultativen Komponenten werden an späterer Stelle noch ausführlicher beschrieben.

Ein erfindungungsgemäßes Verfahren zur Herstellung einer Kunststoff-Formhaut weist in einer besonders bevorzugten Ausführungsform die folgenden Schritte auf:
- Zunächst wird die Lackzusammensetzung in eine Form eingebracht, die gegebenenfalls vor dem Einbringen mit einem Trennmittel versehen wurde.
- Sofern in der applizierten Lackzusammensetzung mindestens ein organisches Lösungsmittel und/oder Wasser als flüchtige Bestandteile enthalten sind, werden diese im wesentlichen vollständig aus der Lackzusammensetzung entfernt. Dies geschieht vorzugsweise durch Ablüften.
- Anschließend wird die Lackzusammensetzung zumindest teilweise gehärtet. Dazu wird sie bestrahlt, insbesondere mit UV-Strahlung.
- In einem weiteren Bestrahlungsschritt wird die Lackzusammensetzung, falls notwendig, endgehärtet. Die Endhärtung der Lackzusammensetzung erfolgt gegebenenfalls, wie oben erwähnt, außerhalb der Form.

Das erfindungsgemäße Verfahren bietet gegenüber allen aus dem Stand der Technik bekannten Verfahren deutliche Vorteile. Die aus dem Stand der Technik bekannten Verfahren basieren alle auf einer thermischen Härtung einer die Formhaut bildenden Lackzusammensetzung. Eine strahlungsbasierte Härtung gemäß der vorliegenden Erfindung läßt sich dagegen zeitsparender in einen Produktionsablauf integrieren.

Daneben ist als weiterer Vorteil herauszustellen, daß bei der Herstellung einer Kunststoff-Formhaut gemäß dem erfindungsgemäßen Verfahren als Lackzusammensetzung auch sogenannte Einkomponentensysteme einsetzbar sind. Zur thermischen Härtung vorgesehene Lackzusammensetzungen werden üblicherweise erst bei der Applikation aus einem Stammlack und einem Härter gemischt, da die nach Zumischen des Härters entstandene Lackzusammensetzung nur für einen bestimmten Zeitraum verarbeitbar ist. Abhängig von der Umgebungstemperatur kann die Viskosität einer Mischung aus Stammlack und Härter schon nach kurzer Zeit derart stark ansteigen, daß eine Applikation einer solchen Lackzusammensetzung nicht mehr möglich ist. Bei der Herstellung von Kunststoff-Formhäuten gemäß dem erfindungsgemäßen Verfahren lassen sich dagegen auch einkomponentige Lackzusammensetzungen ohne zugemischten Härter einsetzen. Diese können vergleichsweise einfach appliziert werden, da ein Mischungsschritt entfällt. Zudem können sie problemlos auch über längerere Zeiträume unter Lichtausschluß gelagert werden.

Auch eine Kunststoff-Formhaut für Formteile, insbesondere für Innenverkleidungsteile aus Kunststoff für Kraftfahrzeuginnenräume, ist Gegenstand dieser Anmeldung. Eine Kunststoff-Formhaut gemäß der vorliegenden Erfindung zeichnet sich dadurch aus, daß sie durch Strahlung mindestens teilweise gehärtet ist. Eine solche Kunststoff-Formhaut kann insbesondere auch durch das oben beschriebene erfindungsgemäße Verfahren zur Herstellung einer Kunststoff-Formhaut erhalten werden.

Eine erfindungsgemäße Kunststoff-Formhaut weist eine hervorragende mechanische und chemische Beständigkeit auf, die die thermisch gehärteter Formhäute deutlich übertreffen kann.

Ebenfalls Gegenstand der vorliegenden Erfindung ist ein Verfahren zur Herstellung von Formteilen, insbesondere von Innenverkleidungsteilen aus Kunststoff für Kraftfahrzeuginnenräume, die einen Verbund aus einem Polyadditionsprodukt aus mehrwertigen Alkoholen und Isocyanaten und eine durch Strahlung mindestens teilweise gehärtete Kunststoff-Formhaut aufweisen. Bei diesem Verfahren wird in einem ersten Schritt eine Kunststoff-Formhaut gemäß einem der oben beschriebenen Verfahren hergestellt. Anschließend wird in einem weiteren Schritt das Polyadditionsprodukt in Kontakt mit der Oberfläche der Formhaut hergestellt.

In einer bevorzugten Ausführungsform des erfindungsgemäßen Verfahrens Verfahren zur Herstellung von Formteilen wird zunächst die Lackzusammensetzung zur Herstellung der Formhaut in eine Form eingebracht. Vor dem Einbringen wurde die Form gegebenenfalls mit einem Trennmittel versehen. In einem weiteren Schritt werden gegebenenfalls in der Lackzusammensetzung enthaltene flüchtige Bestandteile wie organisches Lösungsmittel und/oder Wasser, vorzugsweise durch Ablüften, entfernt. Anschließend wird die Lackzusammensetzung mindestens teilweise in der Form gehärtet. Dies geschieht durch Bestrahlung, insbesondere mit UV-Strahlung. Dabei härtet die applizierte Lackzusammensetzung unter Bildung einer Formhaut mindestens teilweise aus. Nach Abschluß der mindestens teilweisen Härtung wird ein Verbund aus dem Polyadditionsprodukt aus mehrwertigen Alkoholen und Isocyanaten und der mindestens teilweise gehärteten Kunststoff-Formhaut hergestellt, indem das Polyadditionsprodukt in Kontakt mit der Oberfläche der sich in der Form befindlichen Formhaut hergestellt wird. Dies kann beispielsweise durch Hinterspritzen oder Hinterschäumen geschehen. Danach kann der Verbund aus der Form entnommen werden. In einem weiteren Bestrahlungsschritt wird gegebenenfalls eine Endhärtung der Lackzusammensetzung vorgenommen. Insbesondere kann die Formhaut nach Entnahme des Verbundes aus der Form auch auf der Sichtseite bestrahlt werden.

Auch ein Formteil, insbesondere ein Innenverkleidungsteil aus Kunststoff für Kraftfahrzeuginnenräume, das eine durch Strahlung, vorzugsweise durch elektromagnetische Strahlung, insbesondere durch UV-Strahlung, mindestens teilweise gehärtete Formhaut aufweist, ist Gegenstand der vorliegenden Erfindung. Ein solches Formteil ist insbesondere erhältlich durch das oben beschriebene Verfahren zur Herstellung von Formteilen gemäß der vorliegenden Erfindung.

Desweiteren ist auch eine durch Strahlung härtbare Lackzusammensetzung, aus der eine erfindungsgemäße Formhaut herstellbar ist, Gegenstand der vorliegenden Erfindung. Sie umfaßt in einer bevorzugten Ausführungsform insbesondere
- 20 Gew.-% bis 90 Gew.-%, vorzugsweise 30 Gew.-% bis 80 Gew.-%, insbesondere 40 Gew.-% bis 70 Gew.-% mindestens eines radikalisch polymerisierbaren Bindemittels,
- 0,1 Gew.-% bis 8 Gew.-%, vorzugsweise 1 Gew.-% bis 7 Gew.-%, insbesondere 2 Gew.-% bis 6 Gew.-% mindestens eines Photoinitiators,
- bis zu 20 Gew.-% eines zusätzlichen Lackhilfsmittels oder einer Lackhilfsmittelkombination,
- bis zu 20 Gew.-% mindestens eines organischen Lösungsmittels,
- gegebenenfalls bis zu 10 Gew.-%, vorzugsweise bis zu 5 Gew.-% Wasser,
- gegebenenfalls bis zu 30 Gew.-% Pigmente und/oder Füllstoffe.

Diese Ausführungsform ist mit den oben genannten Zusammensetzungen, die bevorzugt in den erfindungsgemäßen Verfahren zur Herstellung einer Kunststoff-Formhaut bzw. eines Formteils als durch Strahlung härtbare Lackzusammensetzungen eingesetzt werden, identisch. Die folgenden Erläuterungen zu Einzelbestandteilen der Zusammensetzung gelten somit auch für die oben genannten Zusammensetzungen.

Erfindungsgemäß sind als Bindemittel diejenigen bevorzugt, die funktionelle Gruppen aufweisen, die an einer UV-induzierten radikalischen Polymerisation teilnehmen können. Vorzugsweise handelt es sich bei den funtionellen Gruppen um Acryl- und/oder Vinyl-Gruppen. Als Dispersionen vorliegende Bindemittel sind nach der vorliegenden Erfindung bevorzugt. Besonders bevorzugt handelt es sich bei dem mindestens einen Bindemittel um ein Bindemittel auf Basis von Urethanacrylat, insbesondere um eine Urethanacrylat-Dispersion.

Das mindestens eine Bindemittel weist insbesondere einen Festkörperanteil zwischen 25 Gew.-% und 100 Gew.-% auf. Liegt es als Urethanacrylat-Dispersion vor, so liegt sein maximaler Festkörperanteil bevorzugt zwischen 30 Gew.-% und 60 Gew.-%, insbesondere zwischen 40 Gew.-% und 50 Gew.-%. Unabhängig von dem angegebenen Anteil von bis zu 20 Gew.-% an organischem Lösungsmittel sowie dem Wasseranteil von bis zu 10 Gew.-% in der erfindungsgemäßen härtbaren LackZusammensetzung kann damit auch das Bindemittel einen Lösungsmittel- und/oder Wasseranteil aufweisen.

Erfindungsgemäß als Photoinitiatoren geeignet sind u.a. α-Hydroxyalkylphenone oder Acylphosphinoxide, die beispielsweise unter den Handelsbezeichnungen Irgacure® 184 und Irgacure® 819 von der Firma Ciba-Geigy vertrieben werden.

Als Pigmente können sowohl anorganische als auch organische Pigmente zugesetzt werden. Als Füllstoffe kommen alle dem Fachmann bekannte entsprechende Zusätze wie z. B. Kieselgele oder Talkum in Betracht.

Unter Lackhilfsmitteln sollen alle handelsüblichen Zusätze verstanden werden, die bei der Herstellung von Lacken den Lackrohstoffen zugesetzt werden können, insbesondere Zusätze, die zur Einstellung und Stabilisierung der Eigenschaften von Lacken dienen. Diese Lackhilfsmittel können in der Lackzusammensetzung allein oder in Kombination miteinander enthalten sein.

In der erfindungsgemäßen Lackzusammensetzung sind als Lackhifsmittel vorzugsweise 0,1 Gew.-% bis 2 Gew.-% Entschäumer, 0,01 Gew.-% bis 1 Gew.-% rheologisches Hilfsmittel zur Einstellung der Strukturviskosität, 0,1 Gew.-% bis 2 Gew.-% Entlüfter, 0,1 Gew.-% bis 2 Gew.-% Hilfsmittel für die Pigmentdispergierung, 0,01 Gew.-% bis 1 Gew.-% Dimethylethanolamin, 0,1 Gew.-% bis 2 Gew.-% Thixotropierungsmittel, 0,1 Gew.-% bis 2 Gew.-% Additive zur Senkung der Oberflächenspannung und 1 Gew.-% bis 5 Gew.-% rheologisches Additiv zur Einstellung der Applikationsviskosität enthalten.

Weitere Merkmale der Erfindung ergeben sich aus der nachfolgenden Beschreibung von bevorzugten Ausführungsformen in Verbindung mit den Unteransprüchen. Hierbei können die einzelnen Merkmale jeweils für sich oder zu mehreren in Kombination miteinander bei einer Ausführungsform der Erfindung verwirklicht sein. Die beschriebenen besonderen Ausführungsformen dienen lediglich zur Erläuterung und zum besseren Verständnis der Erfindung und sind in keiner Weise einschränkend zu verstehen.

### Beispiel

Über ein pneumatisches Lackierverfahren wird eine pigmentierte, aliphatische Lackzusammensetzung in eine mit Trennmittel beschichtete Form appliziert. Die Form ist während des gesamten Verfahrens auf eine Temperatur zwischen 60 °C und 80 °C erwärmt. Bei der Applikation der Lackzusammensetzung wird insbesondere darauf geachtet, daß die Form so beschichtet wird, daß überall eine deckende Schicht erzielt wird.

Die aliphatische Lackzusammensetzung setzt sich aus den folgenden Komponenten zusammen (Angaben in Gew.-%):
- 60,5 %: eines ersten Bindemittels
- 7,4 %: eines zweiten Bindemittels
- 0,3 %: Entschäumer (Byk 024 der Firma Byk-Chemie)
- 7,9 %: anorg. Rheologiehilfsmittel
- 0,6 %: Entlüfter (Tego® Airex 900 der Firma Tego Chemie)
- 0,6 %: Pigmentnetzmittel
- 0,2 %: Dimethylethanolamin
- 0,8 %: Thixotropierungsmittel
- 0,9 %: Substratnetzmittel
- 0,8 %: Photoinitiator 1
- 3,5 %: Photoinitiator 2
- 4,2 %: Schwarzpigment
- 2,3 %: Füllstoff
- 3,1 %: Wasser entsalzt
- 6,1 %: Ethanol
- 0,8 %: rheologisches Additiv zur Einstellung der Applikationsviskosität

Sowohl beim ersten (GK 056 / 114 der BASF AG) als auch beim zweiten Bindemittel (Liopur® DSP 2004-397 der Synthopol Chemie, Buxtehude) handelt es sich jeweils um eine Urethanacrylat-Dispersion. Beide Bindemittel enthalten Acrylsäureestergruppen und können sowohl radikalisch als auch kationisch vernetzt werden.

Bei dem anorg. Rheologiehilfsmittel handelt es sich um eine 3 %ige wäßrige Aufschlemmung eines Schichtsilikats, die von der Firma Elementis Specialies unter der Bezeichnung Bentone EW vertrieben wird und als Lackhilfsmittel zur Einstellung der Strukturviskosität dient.

Als Pigmentnetzmittel wurde Dispers Ayd W 28 (55 %ig) der Firma Elementis Specialties verwendet. Pigmentnetzmittel dienen der Pigmentdispergierung und sind in allen pigmentierten Lacken üblich.

Als Thixotropierungsmittel kam Aerosil® 972 der Firma Degussa (eine pyrogene Kieselsäure) zum Einsatz, als Substratnetzmittel das Polysiloxan Dow Corning 67 der Firma Dow Corning. Das Substratnetzmittel ist ein Additiv zur Senkung der Oberflächenspannung, das insbesondere dann von Bedeutung ist, wenn eine Lackzusammensetzung auf ein Trennmittel appliziert wird.

Bei den beiden Photoinitiatoren handelt es sich um Irgacure 184 (Photoinitiator 1, 45 %ig in Dowanol PNP) und um Irgacure 819 DW (Photoinitiator 2) der Firma Ciba-Geigy. Irgacure 184 ist ein Photoinitiator auf Keton-Basis, bei Irgacure 819 DW handelt es sich um die wäßrige Dispersion eines Phosphinoxids.

Als Pigmente/Füllstoffe sind in der Lackzusammensetzung das Schwarzpigment Paliotol® Schwarz L 0080 (BASF AG) und Blanc fixe micro (Bariumsulfat) enthalten.

Das in der Lackzusammensetzung enthaltene Ethanol dient als Co-Lösungsmittel der Beschleunigung der späteren Entfernung des in der Lackzusammensetzung ebenfalls enthaltenen Wassers.

Als rheologisches Additiv zur Einstellung der Applikationsviskosität dient der Acrylatverdicker Thixol 53 L der Firma Dimed GmbH.

Nach der Applikation der Lackzusammensetzung wird innerhalb von 2 min der sich in der Form befindliche Lack so abgelüftet, daß sich kein Wasser oder Lösungsmittel mehr in der Lackzusammensetzung befindet.

Im nächsten Schritt wird die Lackzusammensetzung in der Form teilgehärtet. Dazu wird der applizierte Lack in allen Bereichen mit UV-Lampen beleuchtet. Hierzu wird eine mit Eisen oder Gallium dotierte Quecksilbermitteldrucklampe verwendet. Diese wird mit einer Belichtungsstärke von 15 Watt/cm² und einem Abstand von 10 bis 12 cm zur lackierten Fläche betrieben. Schlecht zugängliche Bereiche werden mit LED-Lichtleiter-Polymerisationslampen beleuchtet. Die Härtungsgeschwindigkeit liegt bei 3 bis 5 m/min. Zur Teilhärtung wird die Form mit dem Lack zweimal bestrahlt.

Nach abgeschlossener Bestrahlung wird eine Matrix in Form eines aromatischen Polyurethansystems in die Form und auf die teilgehärtete Lackzusammensetzung aufgebracht. Nach Trocknung der Matrix wird der erzeugte Lack-Matrix-Verbund aus der Form entnommen.

Das so erzeugte Formteil wird abschließend noch einmal von der Lackseite mit UV-Licht bestrahlt.

## Patentansprüche

1. Verfahren zur Herstellung einer Kunststoff-Formhaut für Formteile, insbesondere für Innenverkleidungsteile aus Kunststoff für Kraftfahrzeuginnenräume, wobei die Formhaut aus einer Lackzusammensetzung hergestellt wird, die durch Bestrahlung mindestens teilweise gehärtet wird.

2. Verfahren nach Anspruch 1, **dadurch gekennzeichnet, daß** die Lackzusammensetzung mit elektromagnetischer Strahlung, insbesondere mit UV-Strahlung, gehärtet wird.

3. Verfahren nach einem der Ansprüche 1 oder 2, **dadurch gekennzeichnet, daß** die Lackzusammensetzung in einer Form bestrahlt wird.

4. Verfahren nach Anspruch 3, **dadurch gekennzeichnet, daß** die Form während des Verfahrens beheizt wird, vorzugsweise auf eine Temperatur im Bereich zwischen 60 °C und 80 °C.

5. Verfahren nach einem der Ansprüche 3 oder 4, **dadurch gekennzeichnet, daß** die Form vor Einbringen der Lackzusammensetzung mit einem Trennmittel versehen wird.

6. Verfahren nach einem der vorhergehenden Ansprüche, **dadurch gekennzeichnet, daß** in der Lackzusammensetzung enthaltenes organisches Lösungsmittel und/oder Wasser vor der Bestrahlung im wesentlichen vollständig entfernt wird, insbesondere durch Ablüften.

7. Verfahren nach einem der vorhergehenden Ansprüche, **dadurch gekennzeichnet, daß** die Lackzusammensetzung nach der mindestens teilweisen Härtung in mindestens einem weiteren Bestrahlungsschritt endgehärtet wird.

8. Verfahren nach einem der vorhergehenden Ansprüche, **dadurch gekennzeichnet, daß** die Lackzusammensetzung die folgende Zusammensetzung besitzt:
- 20 Gew.-% bis 90 Gew.-% vorzugsweise 30 Gew.-% bis 80 Gew.-%, insbesondere 40 Gew.-% bis 70 Gew.-%, mindestens eines radikalisch polymerisierbaren Bindemittels,
- 0,1 Gew.-% bis 8 Gew.-%, vorzugsweise 1 Gew.-% bis 7 Gew.-%, insbesondere 2 Gew.-% bis 6 Gew.-%, mindestens eines Photoinitiators,
- gegebenenfalls bis zu 20 Gew.-% eines zusätzlichen Lackhilfsmittels oder einer Lackhilfsmittelkombination,
- gegebenenfalls bis zu 50 Gew.-%, vorzugsweise bis zu 20 Gew.-% mindestens eines organischen Lösungsmittels,
- gegebenenfalls bis zu 10 Gew.-%, vorzugsweise bis zu 5 Gew.-% Wasser,
- gegebenenfalls bis zu 30 Gew.-% Pigmente und/oder Füllstoffe.

9. Verfahren nach einem der vorhergehenden Ansprüche, mit den Schritten
- Einbringen der Lackzusammensetzung in eine Form, die gegebenenfalls mit einem Trennmittel versehen ist,
- gegebenenfalls Entfernen von in der Lackzusammensetzung enthaltenem organischem Lösungsmittel und/oder Wasser, vorzugsweise durch Ablüften,
- mindestens teilweise Härtung der Lackzusammensetzung durch Bestrahlung, insbesondere mit UV-Strahlung,
- gegebenenfalls Endhärtung der Lackzusammensetzung in einem weiteren Bestrahlungsschritt.

10. Durch Strahlung mindestens teilweise gehärtete Kunststoff-Formhaut für Formteile, insbesondere für Innenverkleidungsteile aus Kunststoff für Kraftfahrzeuginnenräume.

11. Kunststoff-Formhaut nach Anspruch 10, erhalten durch ein Verfahren nach einem der Ansprüche 1 bis 9.

12. Kunststoff-Formhaut nach Anspruch 10, erhältlich durch ein Verfahren nach einem der Ansprüche 1 bis 9.

13. Verfahren zur Herstellung von Formteilen, enthaltend einen Verbund aus einem Polyadditionsprodukt aus mehrwertigen Alkoholen und Isocyanaten und einer mindestens teilweise gehärteten Kunststoff-Formhaut, insbesondere von Innenverkleidungsteilen aus Kunststoff für Kraftfahrzeuginnenräume, wobei die Kunststoff-Formhaut gemäß einem Verfahren nach einem der Ansprüche 1 bis 9 hergestellt wird und anschließend in einem weiteren Schritt das Polyadditionsprodukt in Kontakt mit der Oberfläche der Formhaut hergestellt wird.

14. Verfahren nach Anspruch 13, umfassend die Schritte
- Einbringen der Lackzusammensetzung in eine Form, die gegebenenfalls mit einem Trennmittel versehen ist,
- gegebenenfalls Entfernen von in der Lackzusammensetzung enthaltenem organischem Lösungsmittel und/oder Wasser, vorzugsweise durch Ablüften,
- mindestens teilweise Härtung der Lackzusammensetzung in der Form durch Bestrahlung, insbesondere mit UV-Strahlung,
- Herstellung des Verbundes aus dem Polyadditionsprodukt und der mindestens teilweise gehärteten Kunststoff-Formhaut, indem das Polyadditionsprodukt in Kontakt mit der Oberfläche der sich in der Form befindlichen Formhaut hergestellt wird,
- Entnahme des Verbundes aus der Form,
- gegebenenfalls Endhärtung der Lackzusammensetzung in einem weiteren Bestrahlungsschritt.

15. Formteil, insbesondere Innenverkleidungsteil aus Kunststoff für Kraftfahrzeuginnenräume, mit einer durch Strahlung, vorzugsweise durch elektromagnetische Strahlung, insbesondere durch UV-Strahlung, mindestens teilweise gehärteten Formhaut.

16. Formteil nach Anspruch 15, erhalten durch ein Verfahren nach einem der Ansprüche 13 oder 14.

17. Formteil nach Anspruch 15, erhältlich durch ein Verfahren nach einem der Ansprüche 13 oder 14.

18. Verwendung einer durch Strahlung härtbaren Lackzusammensetzung zur Herstellung einer Kunststoff-Formhaut für Formteile, insbesondere für Innenverkleidungsteile aus Kunststoff für Kraftfahrzeuginnenräume.

19. Verwendung nach Anspruch 18, **dadurch gekennzeichnet, daß** die härtbare Lackzusammensetzung die folgenden Bestandteile umfaßt:
- 20 Gew.-% bis 90 Gew.-% vorzugsweise 30 Gew.-% bis 80 Gew.-%, insbesondere 40 Gew.-% bis 70 Gew.-%, mindestens eines radikalisch polymerisierbaren Bindemittels,
- 0,1 Gew.-% bis 8 Gew.-%, vorzugsweise 1 Gew.-% bis 7 Gew.-%, insbesondere 2 Gew.-% bis 6 Gew.-% mindestens eines Photoinitiators,
- bis zu 20 Gew.-% eines zusätzlichen Lackhilfsmittels oder einer Lackhilfsmittelkombination,
- bis zu 20 Gew.-% mindestens eines organischen Lösungsmittels,
- gegebenenfalls bis zu 10 Gew.-%, vorzugsweise bis zu 5 Gew.-% Wasser,
- gegebenenfalls bis zu 30 Gew.-% Pigmente und/oder Füllstoffe.

20. Durch Strahlung härtbare Lackzusammensetzung, umfassend
- 20 Gew.-% bis 90 Gew.-% vorzugsweise 30 Gew.-% bis 80 Gew.-%, insbesondere 40 Gew.-% bis 70 Gew.-%, mindestens eines radikalisch polymerisierbaren Bindemittels,
- 0,1 Gew.-% bis 8 Gew.-%, vorzugsweise 1 Gew.-% bis 7 Gew.-%, insbesondere 2 Gew.-% bis 6 Gew.-% mindestens eines Photoinitiators,
- bis zu 20 Gew.-% eines zusätzlichen Lackhilfsmittels oder einer Lackhilfsmittelkombination,
- bis zu 20 Gew.-% mindestens eines organischen Lösungsmittels,
- gegebenenfalls bis zu 10 Gew.-%, vorzugsweise bis zu 5 Gew.-% Wasser,
- gegebenenfalls bis zu 30 Gew.-% Pigmente und/oder Füllstoffe.

21. Lackzusammensetzung nach Anspruch 20, **dadurch gekennzeichnet, daß** es sich bei dem Bindemittel um ein Bindemittel auf Basis von Urethanacrylat handelt.

22. Lackzusammensetzung nach einem der Ansprüche 20 oder 21, **dadurch gekennzeichnet, daß** als Lackhilfsmittel enthalten sind:
- 0,1 bis 2 % Entschäumer,
- 0,01 bis 1,0 % Rheologisches Hilfsmittel zur Einstellung der Strukturviskosität,
- 0,1 bis 2 % Entlüfter,
- 0,1 bis 2 % Hilfsmittel für die Pigmentdispergierung,
- 0,01 bis 1 % Dimethylethanolamin zur Einstellung des pH-Wertes,
- 0,1 bis 2,0 % Thixotropierungsmittel,
- 0,1 bis 2 % Additive zur Senkung der Oberflächenspannung,
- 1 bis 5 % rheologisches-Additiv zur Einstellung der Applikationsviskosität.
